Europäisches Patentamt

European Patent Office

Office européen des brevets

(19)

(11) Veröffentlichungsnummer : **0 165 324**
**B1**

(12) **EUROPÄISCHE PATENTSCHRIFT**

(45) Veröffentlichungstag der Patentschrift :
25.05.88

(21) Anmeldenummer : 84106944.6

(22) Anmeldetag : 18.06.84

(51) Int. Cl.⁴ : **G 02 F   1/11, G 02 B  26/02,**
**G 05 D  25/02**.

(54) **Verfahren und Einrichtung zur akustischen Kontrolle von Justiervorgängen an optischen Vorrichtungen.**

(43) Veröffentlichungstag der Anmeldung :
27.12.85 Patentblatt 85/52

(45) Bekanntmachung des Hinweises auf die Patenterteilung : 25.05.88 Patentblatt 88/21

(84) Benannte Vertragsstaaten :
AT BE CH DE FR GB IT LI NL SE

(56) Entgegenhaltungen :
DE-A- 2 850 743
DE-A- 3 151 834
US-A- 4 081 216
US-A- 4 126 834
APPLIED OPTICS, Band 18, Nr. 17, 1 September
1979;H.P. LAYER "Acoustooptic modulator intensity
servo", Seiten 2947-2949

(73) Patentinhaber : DR.-ING. RUDOLF HELL GmbH
Grenzstrasse 1-5
D-2300 Kiel 14 (DE)

(72) Erfinder : Schulz-Hennig, Jörg
Gartenweg 7
D-2305 Heikendorf (DE)
Erfinder : Sievers, Horst
Buschstrasse 2
D-2308 Preetz (DE)

EP 0 165 324 B1

Anmerkung : Innerhalb von neun Monaten nach der Bekanntmachung des Hinweises auf die Erteilung des
europäischen Patents im Europäischen Patentblatt kann jedermann beim Europäischen Patentamt gegen das erteilte
europäische Patent Einspruch einlegen. Der Einspruch ist schriftlich einzureichen und zu begründen. Er gilt erst als
eingelegt, wenn die Einspruchsgebühr entrichtet worden ist (Art. 99(1) Europäisches Patentübereinkommen).

## Beschreibung

Die vorliegende Erfindung bezieht sich auf die Gebiete der abbildenden Optik und der Laser-Optik und betrifft optische Vorrichtungen, bei denen die optische Achse eines Lichtbündels bezüglich der Lage und/oder Richtung justiert werden muß.

Die Intensitätsverteilung, die Lage oder die Richtung eines Lichtbündels wird durch optische Komponenten, wie Spiegel, Umlenkprismen, Linsen, optisch transparente Plan- und Keilplatten, Strichgitter, holografische Ablenkblenden, akustische Multifrequenz-Modulatoren oder akustooptische Reflektoren beeinflußt. Schließlich kann auch die Lichtquelle selbst bewegt werden. Die Justierung eines Lichtbündels bezüglich seiner Intensitätsverteilung, seiner Lage oder seiner Richtung erfolgt durch geeignete Justiermittel in Form von mechanischen Verstellungen wie Spiegelhalterungen oder in Form von elektromechanischen Verstellungen wie Piezoantrieben.

Zur Kontrolle der Justierung eines Lichtbündels ist es bekannt, während des Justiervorganges Lehren, wie Zielscheiben, Schirme oder Lochblenden zu beobachten oder die Signale von geeigneten Fotodetektoren z. B. auf einem Oszillographen sichtbar zu machen.

Die bekannten Justierhilfen sind in vielen Fällen aber nicht genau genug, liefern manchmal keine eindeutige Aussage über eine optimale Justierung und sind gelegentlich auch schwer zu handhaben. Hinzu kommt, daß es beispielsweise aufgrund der exponierten Lage eines Justiermittels oder der kompakten Bauweise einer optischen Vorrichtung oftmals nicht möglich ist, beim Justiervorgang gleichzeitig eine genaue Beobachtung oder Kontrolle der erfolgten Justierung vorzunehmen.

Der Erfindung liegt daher die Aufgabe zugrunde, ein Verfahren und eine Einrichtung zur akustischen Kontrolle der Justierung der optischen Achse eines Lichtbündels bezüglich Lage und/oder Richtung anzugeben, mit deren Hilfe die Justierung leichter und genauer durchzuführen ist und mit denen außerdem die erforderlichen Schritte für die optische Justierung nach Größe und Richtung signalisiert wird.

Diese Aufgabe wird bezüglich des Verfahrens durch die Merkmale der Ansprüche 1 und 2 und bezüglich der Einrichtung durch die Merkmale der Ansprüche 11 und 12 gelöst. Vorteilhafte Weiterbildungen sind in den Unteransprüchen angegeben.

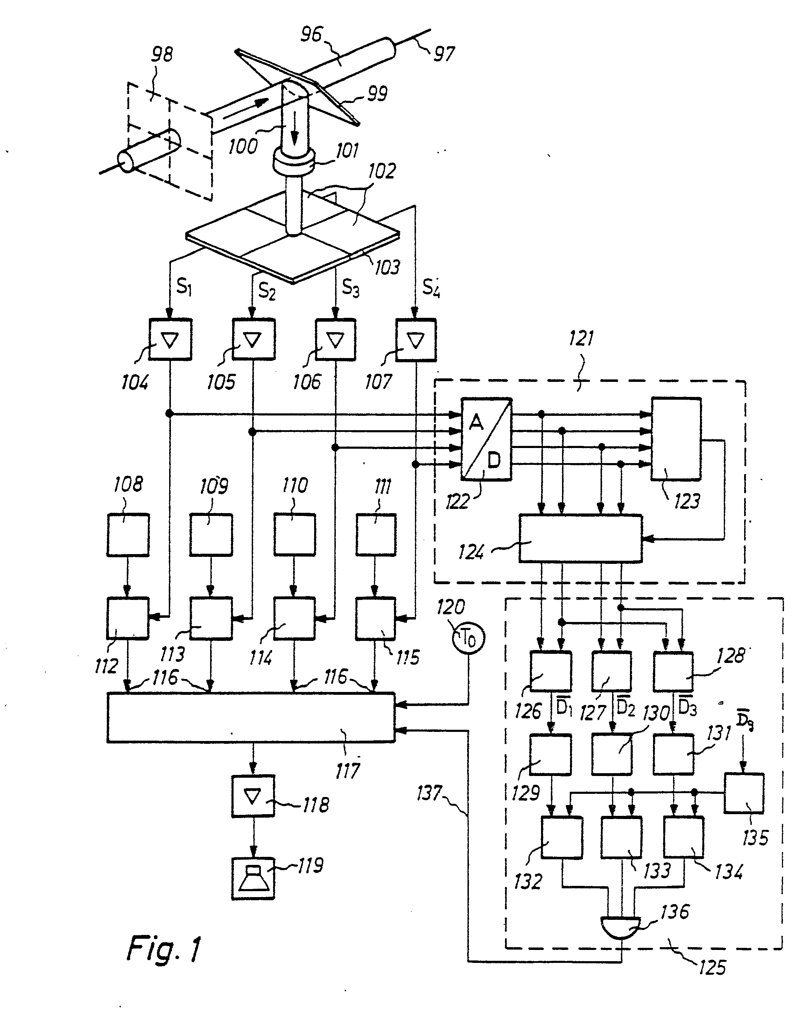

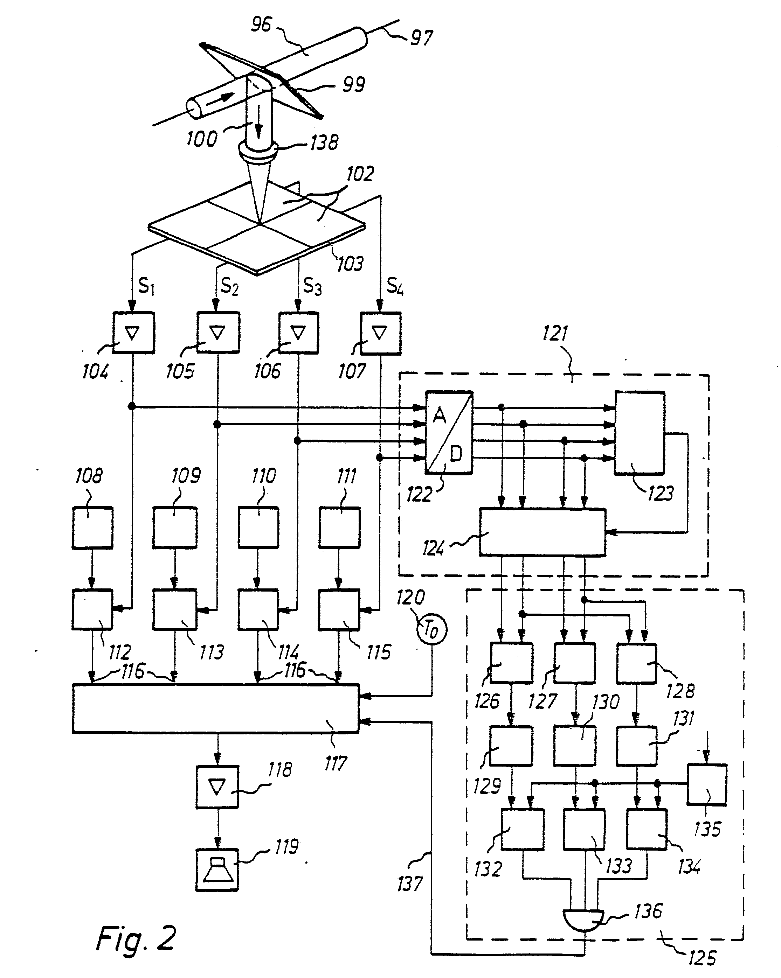

Die Erfindung wird im folgenden anhand der Fig. 1 und 2 näher erläutert. Es zeigen :

Fig. 1 ein Ausführungsbeispiel für eine Einrichtung zur akustischen Kontrolle der Justierung der Lage der optischen Achse eines Lichtbündels, und

Fig. 2 ein Ausführungsbeispiel für eine Einrichtung zur akustischen Kontrolle der Justierung der Richtung eines Lichtbündels.

Fig. 1 zeigt ein Ausführungsbeispiel einer Einrichtung zur akustischen Kontrolle der Justierung eines Lichtbündels bezüglich seiner räumlichen Lage in einer vorgegebenen Bezugsebene quer zur optischen Achse des Lichtbündels.

Ein Lichtbündel 96, dessen Lichtquelle und Justiermittel zur Lagekorrektur nicht dargestellt sind, soll in der Mitte einer quer zur optischen Achse 97 des Lichtbündels 96 liegenden Bezugsebene 98 liegen.

Zur Bestimmung der Lage des Lichtbündels 96 wird mittels eines teildurchlässigen Planspiegels 99 im Strahlengang des Lichtbündels 96 ein Teillichtbündel 100 ausgespiegelt und mit Hilfe einer Anpaßoptik 101 auf der Meßfläche 102 eines Positionsdetektors 103 abgebildet. Die Anpaßoptik 101 ist z. B. ein afokales Teleskop, um die Querschnittsfläche des Teillichtbündels 100 an die Größe der Meßfläche 102 anzupassen. Die Meßfläche 102 kann auch im Strahlengang des Lichtbündels 96 angeordnet sein.

Die Meßfläche 102 des Positionsdetektors 103 ist dabei die Konjugierte der Bezugsebene 98, wodurch sichergestellt ist, daß nur eine Lageverschiebung, nicht aber eine Winkel- bzw. Richtungsänderung des Lichtbündels 96 eine entsprechende Lageverschiebung des Teillichtbündels 100 in der Meßebene 102 bewirkt. Solche Lageverschiebungen lassen sich beispielsweise mit Hilfe von in den Strahlengang eingebrachten Spiegeln oder Prismen durchführen. Der Positionsdetektor 103 besteht aus vier elektrisch getrennten optoelektronischen Wandlern, deren Lichteintrittsflächen die vier Quadranten der Meßfläche 102 bilden, wobei der Mittelpunkt der Meßfläche 102 der Soll-Lage des Lichtbündels 96 in der Bezugsebene 98 entspricht. Als Positionsdetektor kann mit Vorteil eine Quadrantenfotodiode verwendet werden.

Die vier Ausgangssignale $S_1$, $S_2$, $S_3$ und $S_4$ für die vier Quadranten des Positionsdetektors 103, die in Verstärkern 104, 105, 106 und 107 verstärkt werden, sind ein Maß für den jeweiligen Anteil des Teillichtbündels 100, der in die betreffenden Quadranten fällt und damit ein Maß für Richtung und Größe der bestehenden Abweichung von der Soll-Lage.

Den vier Quadranten des Positionsdetektors 103 sind vier Oszillatoren 108, 109, 110 und 111 zugeordnet, welche Schwingungen unterschiedlicher Frequenzen des hörbaren Spektrums erzeugen. Der Oszillator 108 erzeugt eine Schwingung mit einer sehr hohen Frequenz von z. B. 5 kHz, der Oszillator 109 eine Schwingung mit einer hohen Frequenz von z. B. 1 kHz, der Oszillator 110 eine Schwingung mit einer mittleren Frequenz von z. B. 400 Hz und der Oszillator 111 eine Schwingung mit einer tiefen Frequenz von z. B. 100 Hz.

In einem nächsten Verfahrensschritt wird jeweils einer der Parameter der vier Schwingungen wie die Frequenz, die Amplitude, die Tastfrequenz oder das Tastverhältnis in Abhängigkeit der zugeordneten Ausgangssignale $S_1$, $S_2$, $S_3$ und $S_4$

modifiziert und die vier modifizierten Schwingungen als unterschiedliche Meßtöne hörbar gemacht, deren Tonhöhe, Lautstärke, Unterbrechungsfrequenz oder Unterbrechungsdauer von der festgestellten Lage des Lichtbündels 96 abhängig ist.

Im Ausführungsbeispiel werden die vier Schwingungen der Oszillatoren 108, 109, 110 und 111 in nachgeschalteten Amplituden-Modulatoren 112, 113, 114 und 115 in Abhängigkeit der verstärkten Ausgangssignale $S_1$, $S_2$, $S_3$ und $S_4$ des Positionsdetektors 103 amplitudenmoduliert und den Eingängen 116 eines Multiplexers 117 zugeführt. Der Multiplexer 117 schaltet die vier amplitudenmodulierten Schwingungen nacheinander in einer zyklischen Folge über einen Verstärker 118 an einen elektroakustischen Wandler z. B. an einen Lautsprecher 119, der die Schwingungen als aufeinanderfolgende Meßtöne hörbar macht. Das zyklische Umschalten der Schwingungen wird von einem Taktgeber 120 gesteuert, der dem Multiplexer 117 eine entsprechende Taktfolge $T_0$ zuführt.

Die verstärkten Ausgangssignale $S_1$, $S_2$, $S_3$ und $S_4$ des Positionsdetektors 103 werden gleichzeitig in einer Normierungs-Stufe 121 normiert. Zur Bildung der normierten Ausgangssignale $\bar{S}_1$, $\bar{S}_2$, $\bar{S}_3$ und $\bar{S}_4$ werden die in dem A/D-Wandler 122 digitalisierten Ausgangssignale $S_1$, $S_2$, $S_3$ und $S_4$ in einer Addier-Stufe 123 der Normierungs-Stufe 121 zu einem Summenwert $\bar{Z}S$ aufaddiert und in einer Dividier-Stufe 124 durch den Summenwert $\bar{Z}S$ dividiert.

Die normierten Ausgangssignale $\bar{S}_1$, $\bar{S}_2$, $\bar{S}_3$ und $\bar{S}_4$ werden einer Schwellen-Schaltung 125 zugeführt. In der Schwellen-Schaltung 125 werden in Subtrahier-Stufen 126, 127 und 128 drei normierte Differenzsignale $\bar{D}_1$, $\bar{D}_2$ und $\bar{D}_3$ aus dem ersten und zweiten, dem dritten und vierten und dem zweiten und vierten normierten Ausgangssignale $\bar{S}$ ermittelt und nach einer vorgegebenen Funktion modifiziert, im Ausführungsbeispiel in Quadrier-Stufen 129, 130 und 131 quadriert. Die normierten quadrierten Differenzsignale $\bar{D}_1{}^2$, $\bar{D}_2{}^2$ und $\bar{D}_3{}^2$ werden in Vergleichern 132, 133 und 134 mit einem in einem Register 135 ablegbaren normierten Grenzwert $\bar{D}_g$ verglichen. Der Grenzwert $\bar{D}_g$ repräsentiert eine erlaubte Abweichung des Lichtbündels 96 von seiner Soll-Lage. Unterschreitet ein Differenzsignal $\bar{D}^2$ den vorgegebenen, normierten Grenzwert $\bar{D}_g$, so gibt der entsprechende Vergleicher 132, 133 oder 134 ein Signal mit H-Pegel ab. Die Ausgänge der Vergleicher 132, 133 und 134 werden von einem Und-Tor 136 abgefragt, welches am Ausgang ein Signal mit logischem H-Pegel abgibt, wenn alle drei normierten und quadrierten Differenzwerte $\bar{D}^2$ den normierten Grenzwert $\bar{D}_g$ unterschritten haben. In diesem Falle werden durch das Ausgangssignal des Und-Tores 136 auf einer Leitung 137 alle Eingänge des Multiplexers 117 zum Ausgang durchgeschaltet, wodurch alle vier Meßtöne gleichzeitig hörbar werden.

Bei der Justierung der Lage des Lichtbündels liefern die unterschiedlichen Tonhöhen der vier Meßtöne somit einen Hinweis auf die Richtung und die unterschiedlichen Lautstärken einen Hinweis über die Beträge der Lageabweichungen, wobei bei einer symmetrischen Justierung des Lichtbündels 96 in seiner Soll-Lage alle vier Meßtöne gleichzeitig mit derselben Lautstärke hörbar sind.

Die Erzeugung der Meßtöne ist nicht auf das beschriebene Ausführungsbeispiel beschränkt.

Fig. 2 zeigt ein Ausführungsbeispiel für eine Einrichtung zur akustischen Kontrolle der Justierung der Richtung bzw. des Winkels des Lichtbündels 96 bezüglich einer vorgegebenen optischen Achse. Diese Einrichtung unterscheidet sich von der in Fig. 1 dargestellten Einrichtung nur dadurch, daß die Anpaßoptik 101 durch eine fokussierende Optik 138 ersetzt ist. Durch diese Optik 138 wird das Teillichtbündel 101 derart auf die Meßfläche 102 des Positionsdetektors 103 fokussiert, daß nur Richtungsänderungen, nicht aber Parallelverschiebungen des Lichtbündels eine Lageveränderung der Lichtverteilung auf der Meßfläche 102 des Positionsdetektors 103 bewirken.

Zur gleichzeitigen akustischen Überwachung der Lage- und Winkel-Justierung eines Lichtbündels können die Einrichtungen nach Fig. 1 und 2 in vorteilhafter Weise auch zu einer Einrichtung kombiniert werden. In diesem Falle werden die in den Verstärken 104, 105, 106 und 107 verstärkten vier Ausgangssignale S des zur Lagemessung verwendeten Positionsdetektors 103 nach Fig. 1 und die vier Ausgangssignale des zur Winkelmessung verwendeten Positionsdetektors 103 nach Fig..2 wahlweise mittels eines Umschalters auf die Amplituden-Modulatoren 112, 113, 114 und 115 und auf die Normierungs-Stufe 121 geschaltet. Die Umschaltung der Lage- oder der Winkel-Meßeinheit auf die Signalausweteschaltung mittels des Umschalters kann von Hand oder automatisch im zyklischen Wechsel mittels eines Zeitgebers erfolgen.

Während die beschriebenen Einrichtungen eine Justieranweisung mit einer Tabelle benötigen, um bei bestimmten Meßtönen bzw. Tonfolgen geeignete Justiermaßnahmen durchzuführen, können anstelle der Erzeugung von Meßtönen bestimmte digitale Speicherinhalte aus einem Demodulator ausgelesen werden, mit denen über Verstärker und Lautsprecher Lautfolgen erzeugt werden, die vom Bediener als Anweisungen in menschlicher Sprache identifiziert werden.

Sollte statt der relativen Lage und/oder Richtung des Lichtbündels doch die absolute Lage und/oder Richtung von Interesse sein, wird die Normierungs-Stufe 121 überbrückt oder entfällt ganz. Dann wird in das Register 135 der Schwellen-Schaltung 125 ein absoluter Grenzwert geladen.

**Patentansprüche**

1. Verfahren zur akustischen Kontrolle der Lage-Justierung der optischen Achse eines Lichtbündels auf einen Soll-Punkt, dadurch gekenn-

zeichnet, daß

a) eine im Strahlengang des Lichtbündels (96) liegende Meßfläche (103) in Sektoren (102) unterteilt wird, wobei die Scheitelpunkte der Zentriwinkel der Sektoren (102) in dem Soll-Punkt liegen,

b) die in die einzelnen Sektoren (102) der Meßfläche (103) fallenden Lichtanteile des Lichtbündels (96) optoelektronisch ausgemessen werden, welche die Lageabweichung der optischen Achse (97) des Lichtbündels (96) in den einzelnen Sektoren (102) vom Soll-Punkt repräsentieren, und

c) für die einzelnen Sektoren (102) der Meßfläche (103) unterschiedliche Schwingungen erzeugt, jeweils Parameter der Schwingungen in Abhängigkeit der gemessenen Lichtanteile in den zugeordneten Sektoren (102) geändert, und die in den Parametern geänderten Schwingungen als für die einzelnen Sektoren (102) charakteristische Meßtöne hörbar gemacht werden.

2. Verfahren zur akustischen Kontrolle der Richtungs-Justierung der optischen Achse eines Lichtbündels auf einer Soll-Achse, dadurch gekennzeichnet, daß

a) das Lichtbündel (96) auf eine im Strahlengang liegende Meßfläche (103) fokussiert wird,

b) die Meßfläche (103) in Sektoren (102) unterteilt wird, wobei die Schnittpunkte der Zentriwinkel der Sektoren (102) im Durchstoßpunkt der Soll-Achse durch die Meßfläche (103) liegen,

c) die in den einzelnen Sektoren (102) der Meßfläche (103) fallenden Lichtanteile des fokussierten Lichtbündels (96) optoelektronisch ausgemessen werden, welche die Richtungs-Abweichungen der optischen Achse (97) des Lichtbündels (96) in den einzelnen Sektoren (102) von der Soll-Achse repräsentieren, und

d) für die einzelnen Sektoren (102) der Meßfläche (103) unterschiedliche Schwingungen erzeugt, jeweils Parameter der Schwingungen in Abhängigkeit der gemessenen Lichtanteile in den zugeordneten Sektoren (102) geändert, und die in den Parametern geänderten Schwingungen als für die einzelnen Sektoren (102) charakteristische Meßtöne hörbar gemacht werden.

3. Verfahren nach Anspruch 1 oder 2, dadurch gekennzeichnet, daß als Parameter der Schwingungen die Frequenzen, die Amplituden, die Tastfrequenzen oder die Tastverhältnisse und damit die Tonhöhen, die Lautstärken, die Unterbrechungsfrequenzen oder die Unterbrechungsdauer der Meßtöne in Abhängigkeit der gemessenen Lichtanteile geändert werden.

4. Verfahren nach Anspruch 3, dadurch gekennzeichnet, daß für die einzelnen Sektoren (102) der Meßfläche (103) Schwingungen unterschiedlicher Frequenzen erzeugt und die Amplituden der Schwingungen in Abhängigkeit der gemessenen Lichtanteile geändert werden, wodurch für die einzelnen Sektoren (102) Meßtöne unterschiedlicher Tonhöhen gewonnen werden, deren Lautstärken von den festgestellten Abweichungen abhängig sind.

5. Verfahren nach einem der Ansprüche 1 bis 4, dadurch gekennzeichnet, daß die charakteristischen Meßtöne für die einzelnen Sektoren (102) der Meßfläche (103) nacheinander in zyklischer Folge hörbar gemacht werden.

6. Verfahren nach einem der Ansprüche 1 bis 5, dadurch gekennzeichnet, daß

a) Differenzsignale (D) aus den die gemessenen Lichtanteile darstellenden Signalen (S) benachbarter und gegenüberliegender Sektoren (102) der Meßfläche (103) gebildet werden,

b) die Differenzsignale (D) mit einem vorgegebenen Grenzwert ($D_g$) verglichen werden, der eine erlaubte Abweichung von den Soll-Werten darstellt, und

c) das Unterschreiten des Grenzwertes ($D_g$) durch die Differenzsignale (D) hörbar gemacht wird.

7. Verfahren nach Anspruch 6, dadurch gekennzeichnet, daß beim Unterschreiten des Grenzwerts ($D_g$) die zyklische Folge der einzelnen Meßtöne unterbrochen und alle Meßtöne gleichzeitig hörbar werden.

8. Verfahren nach einem der Ansprüche 1 bis 7, dadurch gekennzeichnet, daß die die gemessenen Lichtanteile darstellenden Signale (S) normiert werden.

9. Verfahren nach Anspruch 6, dadurch gekennzeichnet, daß die Differenzsignale (D) nach einer vorgegebenen Funktion modifiziert werden.

10. Verfahren nach Anspruch 1, dadurch gekennzeichnet, daß zur Anpassung der Querschnittsfläche des Lichtbündels (96) an die Meßfläche (103) im Strahlengang des Lichtbündels (96) eine Anpassungoptik (101), vorzugsweise ein afokales Teleskop, vor der Meßfläche (103) angeordnet wird.

11. Einrichtung zur akustischen Kontrolle der Lage-Justierung der optischen Achse eines Lichtbündels auf einen Sollpunkt, gekennzeichnet durch

a) eine optoelektronische Meßanordnung (103 bis 107) im Strahlengang des Lichtbündels (96), deren Meßfläche (103) in Sektoren (102) unterteilt ist, wobei die Scheitelpunkte der Zentriwinkel der Sektoren (102) in dem Sollpunkt liegen, zur Messung der in den einzelnen Sektoren (102) fallenden Lichtanteile des Lichtbündels (96) als Signale (S),

b) einen mit der Meßanordnung (103 bis 107) verbundenen Schwingungs-Generator (108 bis 114) zur Erzeugung von für die einzelnen Sektoren (102) der Meßfläche (103) charakteristischen Schwingungen und zur Änderung der Schwingungen in Abhängigkeit der gemessenen Lichtanteile,

c) einen an den Schwingungs-Generator (108 bis 114) angeschlossenen Umschalter (117) zum aufeinanderfolgenden, zyklischen Durchschalten der geänderten Schwingungen, und

d) einen elektroakustischen Wandler (119) zum Hörbarmachen der Schwingungen als Meßtöne.

12. Einrichtung zur akustischen Kontrolle der Richtungs-Justierung der optischen Achse eines Lichtbündels auf eine Soll-Achse, gekennzeichnet durch

a) eine fokussierende Optik (138) im Strahlengang des Lichtbündels (96) zur Fokussierung des Lichtbündels,

b) eine optoelektronische Meßanordnung (103 bis 107) im Strahlengang des fokussierten Lichtbündels (96), deren Meßfläche in Sektoren (102) unterteilt ist, wobei die Scheitelpunkte der Zentriwinkel der Sektoren (102) im Durchstoßpunkt der Soll-Achse durch die Meßfläche (103) liegen, zur Messung der in die einzelnen Sektoren (102) fallenden Lichtanteile des fokussierten Lichtbündels als Signale (S),

c) einen mit der Meßanordnung (103 bis 107) verbundenen Schwingungs-Generator (108 bis 114) zur Erzeugung von für die einzelnen Sektoren (102) charakteristischen Schwingungen und zur Änderung der Schwingungen in Abhängigkeit der gemessenen Lichtanteile,

d) einen an den Schwingungs-Generator (108 bis 114) angeschlossenen Umschalter (117) zum aufeinanderfolgenden, zyklischen Durchschalten der geänderten Schwingungen, und

e) einen elektroakustischen Wandler (119) zum Hörbarmachen der Schwingungen als Meßtöne.

13. Einrichtung nach Anspruch 11 oder 12, dadurch gekennzeichnet, daß der Schwingungs-Generator (108 bis 114) folgende Komponenten aufweist :

a) Oszillatoren (108, 109, 110, 111) zur Erzeugung von Schwingungen unterschiedlicher Frequenzen für die einzelnen Sektoren (102) der Meßfläche (103), und

b) an die Oszillatoren (108, 109, 110, 111) und die Meßanordnung (103 bis 107) angeschlossene Amplituden-Modulatoren (112, 113, 114, 115) zur Amplituden-Änderung der Schwingungen in Abhängigkeit der gemessen Lichtanteile.

14. Einrichtung nach einem der Ansprüche 11 bis 13, dadurch gekennzeichnet, daß zusätzlich eine an die Meßanordnung (103 bis 107) und den Umschalter (117) angeschlossene Schwellen-Schaltung (125) zur Erzeugung eines Steuersignals für den Umschalter (117) vorgesehen ist, die folgende Komponenten aufweist :

a) Differenz-Stufen (126, 127, 128) zur Bildung von Differenz-Signalen (D) aus den Signalen (S) der Meßanordnung (103 bis 107),

b) ein Register (135) zur Vorgabe eines Grenzwertes ($D_g$), und

c) eine mit den Differenz-Stufen (126, 127, 128) und dem Register (135) in Verbindung stehende Vergleichs-Einrichtung (132, 133, 134, 136) zur Bildung des Steuersignals bei Unterschreiten des vorgegebenen Grenzwertes durch die Differenzwerte (D).

15. Einrichtung nach einem der Ansprüche 11 bis 13, dadurch gekennzeichnet, daß zwischen der Meßanordnung (103 bis 107) und der Schwellen-Schaltung (125) eine Normierungs-Stufe (121) zur Normierung der Signale (S) der Meßanordnung (103 bis 107) angeordnet ist.

16. Einrichtung nach Anspruch 14, dadurch gekennzeichnet, daß zwischen den Differenz-Stufen (126, 127, 128) und der Vergleichs-Einrichtung (132, 133, 134, 136) Stufen (129, 130, 131) zur Modifizierung der Differenz-Signale nach einer vergebbaren Funktion angeordnet sind.

17. Einrichtung nach den Ansprüchen 11 und 12, dadurch gekennzeichnet, daß die Einrichtungen zur akustischen Kontrolle der Richtungs-Justierung und zur Lage-Justierung der optischen Achse eines Lichtbündels zu einer Einrichtung vereinigt sind.

**Claims**

1. Method for acoustic verification of the positional adjustment of the optical axis of a light beam to a nominal point, characterised in that

a) a measurement surface (103) lying in the beam path of the light beam (96) is subdivided into sectors, the vertices of the polar angle of the sectors (102) being situated at the nominal point,

b) the light portions of the light beam (96) incident in the individual sectors (102) of the measurement surface (103) are gauged opto-electronically, said portions representing the positional deviation of the optical axis (97) of the light beam (96) in the individual sectors (102) from the nominal point, and

c) different oscillations are generated for the individual sectors (102) of the measurement surface (103), parameters of the oscillations being in each case modified as a function of the light portions measured in the associated sectors (102), and the oscillations modified in respect of parameters are made audible as measurement sounds characteristic of the individual sectors (102).

2. Method for acoustic verification of the directional adjustment of the optical axis of a light beam to a nominal axis, characterised in that

a) the light bram (96) is focussed on a measurement surface (103) situated in the beam path,

b) the measurement surface (103) is subdivided into sectors (102), the points of intersection of the polar angles of the sectors being situated at the point of penetration of the nominal axis through the measurement surface (103),

c) the light portions of the focussed light beam (96) incident on the individual sectors (102) of the measurement surface (103) are gauged opto-electronically, said portions representing the directional deviations of the optical axis (97) of the light beam (96) from the nominal axis in the individual sectors (102), and

d) different oscillations are generated for the individual sectors (102) of the measurement surface (103), parameters of the oscillations being modified in each case as a function of the light portions measured in the associated sectors (102), and the oscillations modified in their parameters are made audible as measurement sounds characteristic of the individual sectors (102).

3. Method according to claim 1 or 2, characterised in that as parameters of the oscillations, the frequencies, the amplitudes, the cycle frequencies or the cycle ratios, and therewith the pitches, the signal strengths, the interruption frequencies or the interruption period of the measurement sounds, are modified as a function of the light portions measured.

4. Method according to claim 3, characterised in that oscillations of different frequencies are generated for the individual sectors (102) of the measurement surface (103), and the amplitudes of the oscillations are modified as a function of the light portions measured, measurement sounds of different pitch thereby being obtained for the individual sectors (102), the signal strengths of which depend on the deviations observed.

5. Method according to one of the claims 1 to 4, characterised in that the characteristic measurement sounds for the individual sectors (102) of the measurement surface (103) are made audible successively in cyclic succession.

6. Method according to one of the claims 1 to 5, characterised in that

a) difference signals (D) are derived from signals (S) representing the measured light portions of adjacent and mutually opposed sectors (102) of the measurement surface (103),

b) the difference signals (D) are compared to a preset threshold value $D_g$) which represents a permissible deviation from the nominal values, and

c) a drop in the difference signals (D) below the threshold value ($D_g$) is made audible.

7. Method according to claim 6, characterised in that with a drop below the threshold value ($D_g$), the cyclic succession of the individual measurement sounds is interrupted and all the measurement sounds become audible at the same time.

8. Method according to one of the claims 1 to 7, characterised in that the signal (S) representing the light portions measured are standardised.

9. Method according to claim 6, characterised in that the difference signals (D) are modified according to a preset function.

10. Method according to claim 1, characterised in that an optical adaptor (101) preferably being an afocal telescope is mounted in the beam path of the light beam (96) in front of the measurement surface (103), for adaptation of the cross-sectional area of the light beam (96) to the measurement surface (103).

11. Apparatus for acoustic verification of the positional adjustment of the optical axis of a light beam to a nominal point, characterised by

a) an opto-electronic measuring arrangement (103-107) in the beam path of the light beam (96), the measurement surface (103) of which is subdivided into sectors (102), the vertices of the polar angles of the sectors (102) being situated at the nominal point, for measuring the light portions of the light beam (96) incident on the individual sectors (102) as signals (S),

b) an oscillation generator (108 to 114) connected to the measuring arrangement (103 to 107) for generating oscillations characteristic of the individual sectors (102) of the measurement surface (103) and for modifying the oscillations as a function of the light portions measured,

c) an operating switch (117) connected to the oscillation generator (108 to 114) for successive cyclic switching of the modified oscillations, and

d) an electro-acoustic transducer (119) to render the oscillations audible as measurement sounds.

12. Apparatus for acoustic verification of the directional adjustment of the optical axis of a light beam to a nominal axis, characterised by

a) A focussing optical device (138) in the beam path of the light beam (96) for focussing the light beam,

b) an opto-electronic measuring arrangement (103 to 107) in the beam path of the focussed light beam (96), the measurement surface of which is subdivided into sectors (102), the vertices of the polar angles of the sectors (102) being situated at the point of penetration of the measurement surface (103) by the nominal axis, for measuring the light portions of the focussed light beam incident on the individual sectors (102) as signals (S),

c) an oscillation generator (108 to 114) connected to the measuring arrangement (103 to 107) for generating oscillations characteristic of the individual sectors (102) and for modifying the oscillations as a function of the light portions measured,

d) an operating switch (117) connected to the oscillation generator (108 to 114) for successive cyclic switching of the modified oscillations, and

e) an electro-acoustic transducer (119) to render the oscillations audible as measurement sounds.

13. Apparatus according to claim 11 or 12, characterised in that the oscillation generator (108 to 114) has the following components :

a) oscillators (108, 109, 110, 111) for generating oscillations of different frequencies for the individual sectors (102) of the measurement surface (103), and

b) amplitude modulators (112, 113, 114, 115) connected to the oscillators (108, 109, 110, 111) and the measuring arrangement (103 to 107) to modify the amplitude of the oscillations as a function of the light portions measured.

14. Apparatus according to one of the claims 11 to 13, characterised in that additionally a threshold circuit (125) is provided, which is connected to the measuring arrangement (103 to 107) and the operating switch (117), for the purpose of generating a control signal for the operating switch (117), which has the following components :

a) difference stages (126, 127, 128) for producing difference signals (D) from the signals (S) of the measuring arrangement (103 to 107),

b) a register (135) for presetting a threshold valud ($D_g$), and

c) a comparator arrangement (132, 133, 134, 136) in communication with the difference stages (126, 127, 128) and the register (135) for the purpose of producing the control signal if the difference values (D) drop below the preset threshold value.

15. Apparatus according to one of the claims 11 to 13, characterised in that a standardization stage (121) for standardizing the signals (S) of the measuring arrangement (103 to 107) is situated between the measuring arrangement (103 to 107) and the threshold circuit (125).

16. Apparatus according to claim 14 characterised in that stages (129, 130, 131) for modifying the difference signals according to a function likely to be established are situated between the difference stages (126, 127, 128) and the comparator arrangement (132, 133, 134, 136).

17. Apparatus according to claims 11 and 12 characterized in that the apparatus for acoustic verification of the directional adjustment and positional adjustment of the optical axis of a light beam are combined into one apparatus.

**Revendications**

1. Procédé pour contrôler acoustiquement le réglage en position, sur un point prédéterminé, de l'axe optique d'un faisceau lumineux, procédé caractérisé en ce que :

a) on subdivise en secteurs (102) une surface de mesure (103) placée sur le trajet du faisceau lumineux (96), les sommets des angles au centre de ces secteurs (102) se situant au point prédéterminé,

b) on mesure optiquement et électroniquement les fractions de lumière du faisceau lumineux (96) qui tombent sur les différents secteurs (102) de la surface de mesure (103), ces fractions représentant les écarts en position, par rapport au point de consigne, de l'axe optique (97) du faisceau lumineux (96), dans les différents secteurs (102),

c) on produit des vibrations, différentes pour les différents secteurs (102) de la surface de mesure (103), des paramètres respectifs de ces vibrations étant modifiés en fonction des fractions de lumière mesurées dans les secteurs (102) correspondants, et les vibrations dont les paramètres ont été ainsi modifiés sont rendues audibles en tant que tonalités de mesure caractéristiques pour les différents secteurs (102).

2. Procédé pour contrôler acoustiquement le réglage en direction, sur un axe de consigne, de l'axe optique d'un faisceau lumineux, procédé caractérisé en ce que :

a) on focalise le faisceau lumineux (96) sur une surface de mesure (103) placée sur son trajet,

b) on subdivise la surface de mesure (103) en secteurs (102), les points d'intersection des angles au centre de ces secteurs (102) se situant au point où l'axe de consigne traverse la surface de mesure (103),

c) on mesure optiquement et électroniquement les fractions de la lumière du faisceau lumineux (96), ainsi focalisé, qui tombent sur les différents secteurs (102) de la surface de mesure (103), ces fractions représentent les écarts en direction, par rapport à l'axe prédéterminé, de l'axe optique (97) du faisceau lumineux (96), dans les différents secteurs (102),

d) on produit des vibrations, différentes pour les différents secteurs (102) de la surface de mesure (103), des paramètres respectifs de ces vibrations étant modifiés, en fonction des fractions de lumière mesurées dans les secteurs (102) correspondants, et les vibrations dont les paramètres ont été ainsi modifiés·sont rendues audibles en tant que tonalités de mesure caractéristiques pour les différents secteurs (102).

3. Procédé selon la revendication 1 ou 2, caractérisé en ce que, comme paramètres des vibrations, on modifie leurs fréquences, leurs amplitudes, les fréquences d'impulsions ou les taux d'impulsions et donc les hauteurs des sons, les intensités des sons, les fréquences d'interruption ou les durées d'interruption des tonalités de mesure, en fonction des fractions de lumière mesurées.

4. Procédé selon la revendication 3, caractérisé en ce que, pour les différents secteurs (102) de la surface de mesure (103), on produit des vibrations de fréquences différentes et qu'on modifie les amplitudes de ces vibrations en fonction des fractions de lumière mesurées, grâce à quoi on obtient pour les différents secteurs (102) des tonalités de mesure de hauteurs de son différentes, dont les intensités sonores dépendent des écarts constatés.

5. Procédé selon une des revendications 1 à 4, caractérisé en ce que les tonalités de mesure, caractéristiques pour les différents secteurs (102) de la surface de mesure (103), sont rendues audibles l'une après l'autre selon une succession cyclique.

6. Procédé selon une des revendications 1 à 5, caractérisé en ce que :

a) des signaux différentiels (D) sont formés à partir des signaux (S) représentant les fractions de lumière mesurées des secteurs voisins et opposés (102) de la surface de mesure (103),

b) ces signaux différentiels (D) sont comparés à une valeur limite (D$_g$) prédéfinie, qui représente un écart permis par rapport aux valeurs de consigne,

c) le franchissement vers le bas de cette valeur de consigne (D$_g$) par les signaux différentiels (D) est rendu audible.

7. Procédé selon la revendication 6, caractérisé en ce que, lors du franchissement vers le bas de la valeur limite (D$_g$) la succession cyclique des différentes tonalités de mesure est interrompue et que toutes les tonalités de mesure deviennent simultanément audibles.

8. Procédé selon une des revendications 1 à 7, caractérisé en ce que les signaux (S) représentant les fractions de lumière mesurées sont normalisés.

9. Procédé selon la revendication 6, caractérisé en ce que les signaux différentiels (D) sont modifiés selon une fonction prédéfinie.

10. Procédé selon la revendication 1, caractérisé en ce que, pour l'adaptation de la surface de section transversale du faisceau lumineux (96) à la surface de mesure (103), une optique d'adaptation (101), de préférence un télescope afocal, est disposée sur le trajet du faisceau lumineux (96), devant la surface de mesure (103).

11. Installation pour contrôler acoustiquement le réglage en position, sur un point de consigne, de l'axe optique d'un faisceau lumineux, installation caractérisée en ce qu'elle comporte :

a) un dispositif optique et électronique de mesure (103 à 107) sur le trajet du faisceau lumineux (96), dispositif dont la surface de mesure (103) est subdivisée en secteurs (102) dont les sommets des angles au centre se situent au point de consigne pour permettre la mesure, sous la forme de signaux (S), des fractions de lumière du faisceau lumineux (96), qui tombent sur les différents secteurs (102),

b) un générateur de vibrations (108 à 114) relié au dispositif de mesure (103 à 107) ; pour produire des vibrations caractéristiques des différents secteurs (102) de la surface de mesure (103), et pour modifier ces vibrations en fonction des fractions de lumière ainsi mesurées,

c) un commutateur (117) raccordé au générateur de vibrations (108 à 114), pour transmettre cycliquement, l'une après l'autre, les vibrations ainsi modifiées,

d) un convertisseur électro-acoustique (119), pour rendre audibles, sous la forme de tonalités de mesure, ces vibrations.

12. Installation pour contrôler acoustiquement le réglage en direction, sur un axe de consigne, de l'axe optique d'un faisceau lumineux, installation caractérisée en ce qu'elle comporte :

a) une optique focalisante (138) sur le trajet du faisceau lumineux (96), pour focaliser ce faisceau lumineux,

b) un dispositif optique et électronique de mesure (103 à 107) sur le trajet du faisceau lumineux focalisé (96), dispositif dont la surface de mesure (103) est subdivisée en secteurs (102) dont les sommets des angles au centre se situent au point où l'axe de consigne traverse la surface de mesure (103), pour permettre la mesure, sous la forme de signaux (S), des fractions de lumière du faisceau lumineux focalisé (96), qui tombent sur les différents secteurs (102),

c) un générateur de vibrations (108 à 114) relié au dispositif de mesure (103 à 107), pour produire des vibrations caractéristiques des différents secteurs (102) de la surface de mesure (103), et pour modifier ces vibrations en fonction des fractions de lumière ainsi mesurées,

d) un commutateur (117) raccordé au générateur de vibrations (108 à 114) pour transmettre cycliquement, l'une après l'autre, les vibrations ainsi modifiées,

e) un convertisseur électro-acoustique (119), pour rendre audibles, sous la forme de tonalités de mesure, ces vibrations.

13. Installation selon la revendication 11 ou 12, caractérisée en ce que le générateur de vibrations (108 à 114) comporte les composants suivants :

a) des oscillateurs (108, 109, 110, 111) pour produire des vibrations de fréquences différentes pour les différents secteurs (102) de la surface de mesure (103),

b) des modulateurs d'amplitude (112, 113, 114, 115), raccordés aux oscillateurs (108, 109, 110, 111) et au dispositif de mesure (103 à 107), pour modifier les amplitudes des vibrations en fonction des fractions de lumière mesurées.

14. Installation selon une des revendications 11 à 13, caractérisée en ce qu'il est en outre prévu un circuit à seuil (125), raccordé au dispositif de mesure (103 à 107) et au commutateur (117), permettant d'obtenir un signal de commande pour le commutateur (117) et qui comporte les constituants suivants :

a) des étages différentiels (126, 127, 128) pour former des signaux différentiels (D) à partir des signaux (S) du dispositif de mesure (103 à 107),

b) un registre (135) pour fournir une valeur limite ($D_g$),

c) un dispositif de comparaison (132, 133, 134, 136) relié aux étages différentiels (126, 127, 128) et au registre (135), pour former le signal de commande lors du franchissement vers le bas de la valeur limite prédéfinie par les valeurs différentielles (D).

15. Installation selon une des revendications 11 à 13, caractérisée en ce qu'un étage de normalisation (121), pour normaliser les signaux (S) du dispositif de mesure (103 à 107), est disposé entre le dispositif (103 à 107) et le circuit à seuil (125).

16. Installation selon la revendication 14, caractérisée en ce que des étages (129, 130, 131), permettant de modifier les signaux différentiels selon une fonction susceptible d'être prédéfinie, sont disposés entre les étages différentiels (126, 127, 128) et le dispositif de comparaison (132, 133, 134, 136).

17. Installation selon les revendications 11 et 12, caractérisée en ce que les installations pour contrôler acoustiquement le réglage en direction et le réglage en position de l'axe optique d'un faisceau lumineux, sont réunies en une seule installation.

Fig. 1

Fig. 2